# EUROPEAN PATENT SPECIFICATION

(11) **EP 0 859 097 B1**
(45) Date of publication and mention of the grant of the patent: **28.04.2004**
(21) Application number: 98200481.4
(22) Date of filing: 16.02.1998
(51) Int. Cl.: E04B 9/04, F24D 3/16, E04B 9/34

(54) **Ceiling element**
Deckenelement
Elément de plafond

(30) Priority: 17.02.1997 NL 1005288; 10.09.1997 NL 1006994
(43) Date of publication of application: 19.08.1998
(73) Proprietor: Inteco B.V., 5280 AB Boxtel (NL)
(72) Inventor: Holthuizen, Jacobus Hubert Joseph Marie, 5627 LG Eindhoven (NL); Langenberg Van de, Wilhelmus Antonius Maria, 5076 RG Haaren (NL)
(74) Representative: Bartelds, Erik

(56) References cited:
- WO-A-96/21827
- DE-C- 971 841
- DE-U- 9 314 291
- FR-A- 1 265 982
- FR-A- 1 522 767
- GB-A- 767 445
- US-A- 2 721 731
- US-A- 3 265 121

## Description

The invention relates to a ceiling element comprising a frame having at least one pipe for a heat transport medium extending in loops and means for distributing heat which extend between the loops and which are connected in heat conducting manner to the pipe, said heat distributing means having an open structure. Such a ceiling element is known from WO 96/21827 and is used for instance to cool or heat office space or living areas. For this purpose a heat transport medium, generally water, is carried through the pipe, the temperature of which medium, depending on the intended use, is higher or lower than the temperature in the space. When the ceiling element serves for heating, hot water will thus be carried through the pipe, whereby the wall of the pipe will function as heat radiator, while in summer cold water will flow through the pipe in order to cool a space, so that the radiation heat from the space by which the walls of the pipes are heated is discharged by the cold water.

Conventional ceiling elements for cooling or heating are provided either with metal pipes or plastic pipes. In the case of metal pipes copper is generally used, as this has very good conduction properties. The copper pipe must have a relatively large through-flow area and therefore, in respect of the required rigidity, must also have a considerable wall thickness. This has the result that the copper pipe cannot be folded in sharp bends, so that relatively large spaces will result between the reciprocally running pipe parts. Uniform heating or cooling of the room area does not hereby take place, since the spaces between the pipe parts do not contribute to this heating or cooling.

This is less of a problem for conventional ceiling elements with plastic pipes. As a result of the lower weight of the plastic, these pipes can take a relatively thin-walled form and can therefore also be bent more sharply. The operation of such an element is thus more uniform than in the case of a copper pipe. However, it is still not optimal due to the lower conductivity of the pipe walls.

In addition, systems are of course known wherein a room area is cooled or heated by blowing conditioned air therein, for instance an air heating or air conditioning system. These systems have the drawback that the energy consumption thereof is comparatively high, while the heat transfer is moreover based on convection, which for good operation entails relatively large air flows having to be generated, which are often perceived as unpleasant by users.

The above-mentioned prior art document WO 96/21827 already discloses a ceiling element with which a better and more uniform heating or cooling of a room area is possible. This prior art ceiling element includes a perforated aluminum sheet which is folded along its sides to form a frame or cassette. A copper pipe for guiding a medium of a given temperature is arranged in wide loops on the perforated sheet. Each stretch of the pipe between consecutive bends is fixed to the sheet by means of an elongated aluminum hat profile. The flanges of each hat profile are provided with holes which cooperate with protruding pins welded on the perforated sheet. The hat profiles are clamped on these pins by means of self-locking washers, so that a close contact between the pipe and the sheet is provided and heat may be transmitted between the pipe and the sheet. A uniform radiation from the whole ceiling element is effected by thus bridging the space between the pipe loops with the sheet, while the open structure of the sheet allows sound to be absorbed by the ceiling element.

The invention now has for its object to provide an improved ceiling element of the above described type, in which the heat distributing means, despite their open structure, still have sufficient cross-sectional area to allow efficient heat transport. According to the invention this is achieved in that the heat distributing means have a honeycomb structure. Such a structure is very open but has a relatively large height and therefore contains a sufficient quantity of heat conducting material.

An optimum distribution of the heat is obtained herein when the open structure comprises openings extending in transverse direction between the loops. The heat transport through the heat distributing means hereby also takes place in transverse direction between the loops, while the heat transport through the loops themselves takes place in longitudinal direction. A very uniform distribution is thus obtained.

The heat distributing means are preferably manufactured from a material with good heat conduction, which can be the same material from which the pipe is manufactured. The pipe and the heat distributing means can herein be manufactured from metal, so that they can be mutually connected by soldering. A good heat transfer between the pipe and the heat distributing means is thus ensured.

A structurally simple embodiment of the ceiling element with very good radiation properties is obtained when the heat distributing means are manufactured integrally with the frame. The frame can herein be formed by for instance folding the edges of the plate-like heat distributing means.

The invention further relates to a ceiling which is formed by a number of ceiling elements as described above.

The invention is now further elucidated on the basis of two embodiments, wherein reference is made to the annexed drawings, in which:
figure 1 shows a perspective view with exploded parts of a ceiling element according to a first embodiment of the invention;
figure 2 is a perspective detail view of the detail II in figure 1;
figure 3 shows a cross-section along the line III-III in figure 1 of the ceiling element in assembled state, and
figure 4 shows a cross-section corresponding with figure 3 of an alternative embodiment of the ceiling element.

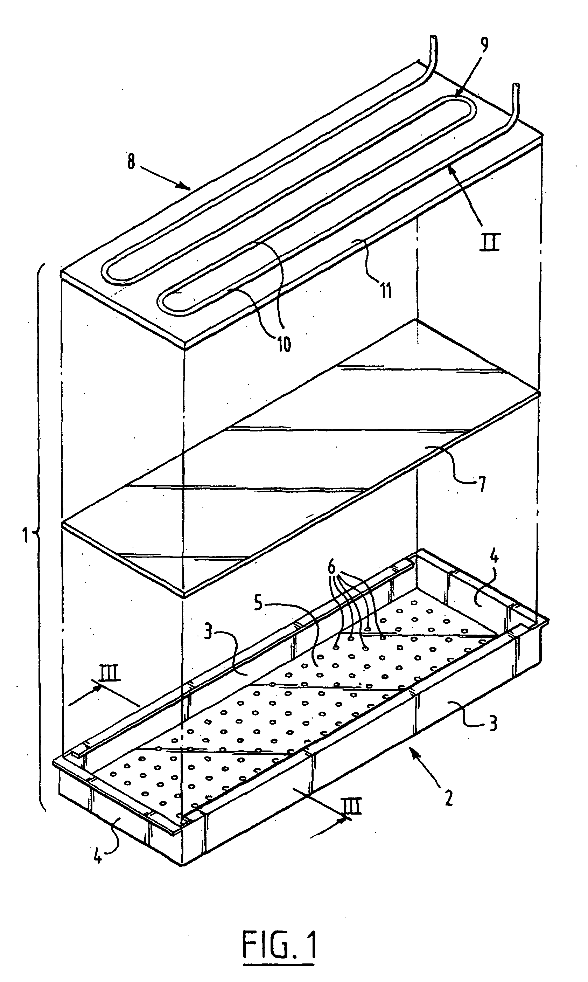

A ceiling element 1 (figure 1) comprises a rectangular frame 2 which is formed by two longitudinal beams 3 and two cross beams 4. Arranged in this frame 2 is a cover plate or bottom 5 which is directed toward the room area and provided with perforations 6. A sound-absorbing lining 7 can be placed on plate 5. This is not necessary however for all applications. The actual radiation element 8 is placed on this sound-absorbing membrane 7. This consists of a pipe 9 which is laid in a number of loops 10 and heat distributing means in the form of a plate 11 extending in transverse direction between loops 10. Pipe 9 herein forms a part of a pipe network (not shown) through which a heat transport medium is pumped.

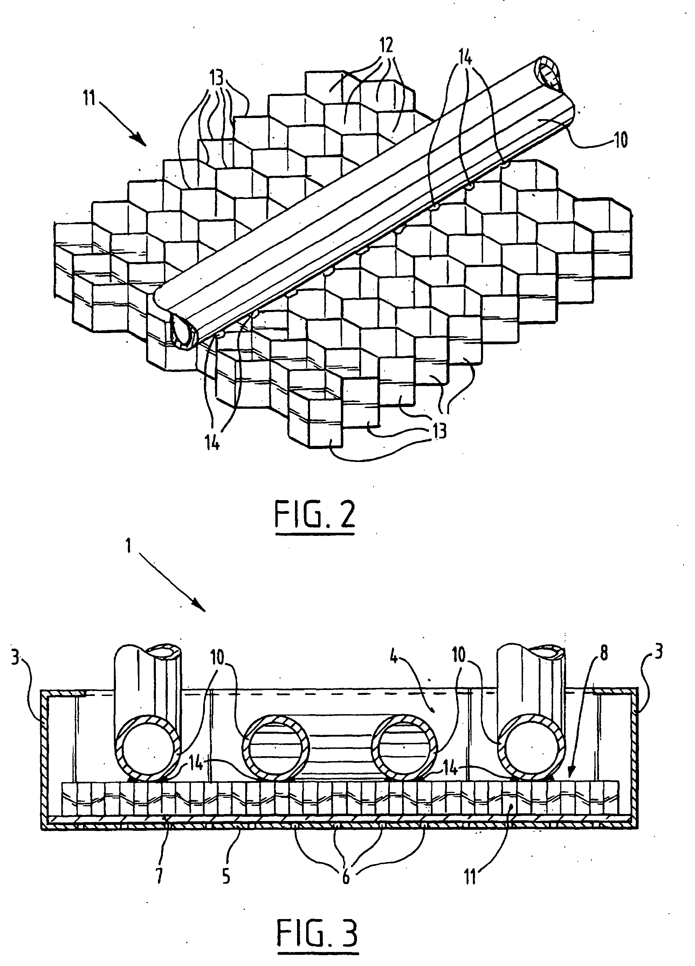

The heat distributing plate 11 has an open structure, for instance in the form of a honeycomb with hexagonal openings 12 bounded by walls 13 (figure 2). A good sound insulation is thus ensured, in that reflection of sound waves is prevented by the open structure, while in addition an excellent distribution of heat occurs between the loops 10 of pipe 9 because the honeycomb material has a relatively great height and thereby sufficient heat transporting surface area. Openings 12 are slightly elongate and herein extend substantially in transverse direction between loops 10. This is therefore also the case for walls 13 of heat distributing plate 11, so that transport of heat takes place mainly in transverse direction through heat distributing plate 11, while loops 10 transport the heat particularly in longitudinal direction. The connection between pipe 9 and heat distributing plate 11 is herein formed by solder connections 14 (figure 3) which conduct the heat well. Any material with good heat conduction, in particular metal, can in principle be chosen as material for both pipe 9 and heat distributing plate 11. With a view to connection of pipe 9 and heat distributing plate 11 by soldering, it is recommended that they are manufactured from the same material. A suitable material for this purpose is for instance copper, but other metals with good heat conduction, such as aluminium, can in principle also be considered suitable for use.

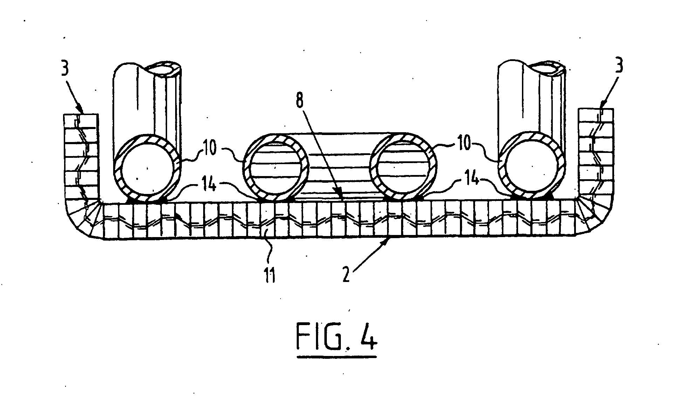

In an alternative embodiment of ceiling element 1 the heat distributing plate 11 is formed integrally with frame 2, which is formed in simple manner by folding the edges of the heat distributing plate through a right angle (figure 4). This embodiment is structurally extremely simple, while the thus formed ceiling element moreover displays very good heating and cooling properties as a result of the absence of the bottom 5 arranged between the room area and the heat distributing plate 11.

The ceiling element according to the invention makes it possible with relatively large pipes bent in wide loops to nevertheless obtain a very uniform heating or cooling action while retaining the sound-absorbing properties of the element.

Where mention is made in this description of the transport of heat, it should be understood that this may refer to both the supply and discharge of heat.

## Claims

1. Ceiling element (1) comprising a frame (2) having at least one pipe (9) for a heat transport medium extending in loops (10) and means (11) for distributing heat which extend between the loops (10) and which are connected in heat conducting manner to the pipe (9), said heat distributing means (11) having an open structure, **characterized in that** the heat distributing means (11) have a honeycomb structure.

2. Ceiling element (1) as claimed in claim 1, **characterized in that** the honeycomb structure of the heat distributing means comprises openings (12) extending in transverse direction between the loops (10).

3. Ceiling element (1) as claimed in claim 1 or 2, **characterized in that** the heat distributing means (11) are manufactured from a material with good heat conduction.

4. Ceiling element (1) as claimed in claim 3, **characterized in that** the heat distributing means (11) are manufactured from the same material as the pipe (9).

5. Ceiling element (1) as claimed in claim 3 or 4, **characterized in that** the pipe (9) and the heat distributing means (11) are manufactured from metal and mutually connected by soldering (14).

6. Ceiling element (1) as claimed in any of the foregoing claims, **characterized in that** the heat distributing means (11) are formed integrally with the frame (2).

7. Ceiling formed by a number of ceiling elements (1) as claimed in any of the foregoing claims.

## Patentansprüche

1. Deckenelement (1) mit einem Rahmen (2), der wenigstens ein Rohr (9) zur Führung eines Wärmetransportmittels aufweist, das sich in Schleifen (10) erstreckt, und mit Mitteln (11) zur Verteilung der Wärme, welche sich zwischen den Schleifen (10) erstrecken und in Wärmeleitverbindung mit dem Rohr (9) stehen, wobei die Wärmeverteilermittel (11) eine offene Struktur aufweisen, **dadurch gekennzeichnet, daß** die Wärmeverteilermittel (11) einen Honigwabenaufbau besitzen.

2. Deckenelement (1) nach Anspruch 1, **dadurch gekennzeichnet, daß** der Honigwabenaufbau der Wärmeverteilermittel Öffnungen (12) aufweist, die sich in Querrichtung zwischen den Schleifen (10) erstrecken.

3. Deckenelement (1) nach den Ansprüchen 1 oder 2, **dadurch gekennzeichnet, daß** die Wärmeverteilermittel (11) aus einem Material mit guter Wärmeleitfähigkeit bestehen.

4. Deckenelement (1) nach Anspruch 3, **dadurch gekennzeichnet, daß** die Wärmeverteilermittel (11) aus dem gleichen Material bestehen, wie das Rohr (9).

5. Deckenelement (1) nach den Ansprüchen 3 oder 4, **dadurch gekennzeichnet, daß** das Rohr (9) und die Wärmeverteilermittel (11) aus Metall bestehen und miteinander durch Verlötung (14) verbunden sind.

6. Deckenelement (1) nach einem der vorhergehenden Ansprüche, **dadurch gekennzeichnet, daß** die Wärmeverteilermittel (11) integral mit dem Rahmen (2) hergestellt sind.

7. Decke mit einer Anzahl von Deckenelementen (1), wie sie in einem der vorherigen Ansprüche beansprucht sind.

## Revendications

1. Elément de plafond (1) comprenant un cadre (2) ayant au moins un tuyau (9) pour un milieu caloporteur s'étendant en boucles (10) et des moyens (11) pour distribuer de la chaleur qui s'étendent entre les boucles (10) et qui sont accouplés d'une manière conductrice au tuyau (9), lesdits moyens de distribution de chaleur (11) ayant une structure ouverte, **caractérisé en ce que** les moyens de distribution de chaleur (11) ont une structure en nid d'abeille.

2. Elément de plafond (1) selon la revendication 1, **caractérisé en ce que** la structure en nid d'abeille des moyens de distribution de chaleur comprend des ouvertures (12) s'étendant dans le sens transversal entre les boucles (10).

3. Elément de plafond (1) selon la revendication 1 ou 2, **caractérisé en ce que** les moyens de distribution de chaleur (11) sont fabriqués à partir d'un matériau ayant une bonne conduction thermique.

4. Elément de plafond (1) selon la revendication 3, **caractérisé en ce que** les moyens de distribution de chaleur (11) sont fabriqués à partir du même matériau que le tuyau (9).

5. Elément de plafond (1) selon la revendication 3 ou 4, **caractérisé en ce que** le tuyau (9) et les moyens de distribution de chaleur (11) sont fabriqués à partir de métal et mutuellement raccordés par soudage (14).

6. Elément de plafond (1) selon l'une quelconque des revendications précédentes, **caractérisé en ce que** les moyens de distribution de chaleur (11) sont formés d'un seul tenant avec le cadre (2).

7. Plafond formé par un certain nombre d'éléments de plafond (1) selon l'une quelconque des revendications précédentes.
